# EUROPÄISCHE PATENTSCHRIFT

(11) **EP 1 240 775 B1**
(45) Veröffentlichungstag und Bekanntmachung des Hinweises auf die Patenterteilung: **12.10.2011**
(21) Anmeldenummer: 00989913.9
(22) Anmeldetag: 29.11.2000
(51) Int. Cl.: H04M 3/493

(54) **KOMMUNIKATIONSSYSTEM UND VERFAHREN ZUM BEREITSTELLEN EINES INTERNET-ZUGANGS ÜBER EIN TELEFON**
COMMUNICATION SYSTEM AND METHOD FOR ESTABLISHING AN INTERNET CONNECTION BY MEANS OF A TELEPHONE
SYSTEME DE COMMUNICATION ET PROCEDE POUR PERMETTRE UN ACCES INTERNET PAR L'INTERMEDIAIRE D'UN TELEPHONE

(30) Priorität: 10.12.1999 DE 19959850
(43) Veröffentlichungstag der Anmeldung: 18.09.2002
(73) Patentinhaber: Deutsche Telekom AG, 53113 Bonn (DE)
(72) Erfinder: FELDES, Stefan, 64319 Pfungstadt (DE); LOCHSCHMIDT, Bernd, 64395 Brensbach (DE)
(86) Internationale Anmeldenummer: PCT/EP2000/011933
(87) Internationale Veröffentlichungsnummer: WO 2001/043388

(56) Entgegenhaltungen:
- WO-A-98/35491
- WO-A1-97/40611
- D. ATKINS ET AL: "Integrated Web and Telephone Service Creation", BELL LABS TECHNICAL JOURNAL, 21 December 1997 (1997-12-21), XP000659566,

## Beschreibung

Die Erfindung betrifft im Allgemeinen ein Kommunikationssystem und Verfahren zum Bereitstellen einer Kommunikationsverbindung zwischen einem Benutzer eines an einem ersten Kommunikationsnetz angeschalteten Telefons und einem an ein zweites Kommunikationsnetz angeschalteten Server sowie ein Verfahren, welches durch das Kommunikationssystem durchgeführt werden kann. Die Erfindung betrifft im Speziellen ein Kommunikationssystem und ein Verfahren zum Bereitstellen eines Zugangs zum Internet über ein Telefon.

Immer mehr Informationsanbieter, auch Content-Provider genannt, veröffentlichen ihre Informationsinhalte in Form von Webseiten im Internet. Bisher können jedoch nur Kunden auf Webseiten zugreifen, die über einen Computer mit einem entsprechenden Online-Anschluß an das Internet angeschaltet sind. Ein Großteil potentieller Kunden verfügt jedoch über keinen Computer und kann daher nicht über das Internet erreicht werden.

Aus der WO 98/35491 ist eine Sprach-DatenSchnittstelle bekannt, über die eine sprachliche Kommunikationsverbindung zwischen einem an einem öffentlichen Fernsprechnetz anschaltbaren Telefon und einer an das Internet anschaltbaren Datenbank bereitgestellt werden kann, wobei der sprachliche Inhalt einer Webseite in akustischer Form am Telefon ausgegeben werden kann. Zwar ist aus der WO 98/35491 weiter bekannt, dass HTML-Dokumente - sogenannte "Flagging-Words" - enthalten, denen Adressen anderer Dokumente zugeordnet sind.

Der Erfindung liegt daher die Aufgabe zugrunde, ein Kommunikationssystem und ein Verfahren zur Verfügung zustellen, die einem Kunden einen akustischen, insbesondere sprachlichen Zugang zu einem insbesondere an das Internet angeschalteten, grafische und/oder textuelle Informationen bereitstellenden Server über ein Telefon ermöglichen, wobei einem Kunden das Navigieren im Internet von einem Dokument zu einem anderen Dokument erleichtert werden soll.

Der Kerngedanke der Erfindung ist darin zu sehen, grafische und/oder textuelle Informationsinhalte, die von an einem Kommunikationsnetz (z. B. das Internet) angeschalteten Servern bereitgestellt werden, akustisch an einem Telefon, welches an einem anderen Kommunikationsnetz, beispielsweise dem öffentlichen Fernsprechnetz, angeschaltet ist, auszugeben.

Das oben genannte technische Problem löst die Erfindung zum einen mit den Merkmalen des Anspruch 1.

Danach ist ein Kommunikationssystem vorgesehen, welches ein erstes Kommunikationsnetz, an das mehrere Telefone anschaltbar sind, und ein zweites Kommunikationsnetz, insbesondere das Internet, aufweist, an das wenigstens ein abrufbare, grafische und/oder textuelle Darstellungen enthaltender Server anschaltbar ist. Sind die Server, die nachfolgend Informations-Server genannt werden, beispielsweise an dem Internet angeschaltet, kann es sich bei den abrufbaren grafischen und/oder textuellen Darstellungen um Webseiten handeln, die zum Beispiel in der HTML (Hypertext-Markup-Language)-Sprache geschrieben sind.

Um einem Kunden über ein Telefon einen Zugang zu einem Informations-Server zu ermöglichen, sind das erste und zweite Kommunikationsnetz über eine Verbindungseinrichtung verbunden. Die Verbindungseinrichtung weist eine Einrichtung zum Erkennen von an einem Telefon eingegebenen Befehlen und/oder Steuerinformationen sowie eine Speichereinrichtung zum Speichern einer grafischen und/oder textuellen Darstellung auf, die unter Ansprechen auf einen eingegebenen Befehle und/oder einer Steuerinformationen von dem Informations-Server abgerufen wurde. Um die grafische und/oder textuelle Darstellung dem Benutzer über das Telefon akustisch wiedergeben zu können, ist eine Umsetzungseinrichtung zum Umsetzen wenigstens eines Teils der in der Speichereinrichtung abgelegten grafischen und/oder textuellen Darstellung in die entsprechende akustische Darstellung zur Übertragung zum Telefon vorgesehen.

An dieser Stelle sei erwähnt, daß es sich bei den vom Benutzer eingebaren Befehlen um einen vorbestimmten Satz von Befehlswörtern, wie z.B. "Hilfe", "Startseite" usw. und bei den eingebaren Steuerinformationen um Sprung- oder Verzweigungsadressen handeln kann, die nicht a priori bekannt sein müssen.

Um aus der grafischen und/oder textuellen Darstellung eine für den Benutzer sinnvolle akustische Darstellung gewinnen zu können, weist die Umsetzungseinrichtung eine Extraktionseinrichtung, beispielsweise einen sogenannten Parser, zum Extrahieren der in die akustische Darstellung umsetzbaren Informationsinhalte und gegebenenfalls von Kennzeichnungen aus der gespeicherten grafischen und/oder textuellen Darstellung auf. Ein sogenannter Interpreter dient zum Identifizieren und Übersetzen der extrahierten Information und gegebenenfalls der Kennzeichnungen derart, daß die übersetzten Informationen in einem Synthesizer in die entsprechende akustische Darstellung umsetzbar sind. Weiterhin sind die Extraktionseinrichtung zum Extrahieren von Steuerparametern aus der gespeicherten grafischen und/oder textuellen Darstellung, der Interpreter zum Identifizieren und Übersetzen der extrahierten Steuerparameter und der Synthesizer zum Umsetzen der übersetzten Steuerparameter in eine entsprechende akustische Darstellung ausgebildet, wobei die akustischen Darstellungen der Steuerparameter nach der Übertragung der akustischen Darstellung der Information zum Telefon übertragen werden.

An dieser Stelle sei angemerkt, daß die Steuerparameter beispielsweise Sprung- oder Verzweigungsadressen, die sogenannten Links entsprechen, enthalten können. Die akustische Darstellungsform der Steuerparameter sind Wörter oder Phrasen, die den vom Benutzer am Telefon eingebbaren Steuerinformationen entsprechen können. Beispielsweise kann ein Steuerparameter auch einen Begriff darstellen, dem mehrere dem Benutzer bekannte Sprung- oder Verzweigungsadressen zugeordnet sind, ohne daß diese dem Benutzer einzeln vorgelesen werden müssen.

Um eine interaktive Kommunikation zwischen dem Benutzer des Telefons und dem Informations-Server bereitstellen zu können, ist eine Einrichtung zur Steuerung des Dialogs zwischen dem Benutzer des Telefons und dem Informations-Server vorgesehen. Die Einrichtung zur Dialogsteuerung kann einerseits durch die aus der gespeicherten grafischen und/oder textuellen Darstellung gewonnen Steuerparameter und andererseits durch die vom Benutzer eingegebenen Befehle und Steureinformationen angesteuert werden. Beispielsweise kann die Einrichtung zur Dialogsteuerung vorbestimmte Texte unter Ansprechen auf vorbestimmte Steuerparameter oder Steuereinformationen für den Benutzer bereitstellen.

Befehle und Steuerinformationen können vom Benutzer in sprachlicher Form oder mittels eines Mehrfrequenzwahlverfahrens (MFV) tastaturgesteuert am Telefon eingegeben werden. Hierzu umfaßt die Einrichtung zum Erkennen von am Telefon eingegebenen Befehlen und/oder Steuerinformationen eine Spracherkennungseinrichtung und/oder einen MFV-Detektor. Mit Hilfe der Spracherkennungseinrichtung und dem akustischen Synthesizer kann eine interaktive Kommunikationsverbindung zwischen dem Benutzer des Telefons und dem Informations-Server auf rein sprachlicher Ebene durchgeführt werden.

Um die Qualität des Synthesizers und der Spracherkennungseinrichtung zu erhöhen, kann ein erster Speicher zum Speichern eines systemspezifischen phonetischen Lexikons, ein zweiter Speicher zum vorübergehenden Ablegen eines zu einer grafischen und/oder textuellen Darstellung gehörenden phonetischen Lexikons und/oder ein dritter Speicher vorgesehen sein, in den jeder Informationsanbieter sein individuelles phonetisches Lexikon aktualisierbar ablegen kann. Das phonetische Lexikon kann in der jeweiligen grafischen und/oder textuellen Darstellung enthalten sein oder unter Ansprechen auf einen vorbestimmten Steuerparameter in der Verbindungseinrichtung aktiviert und dem Synthesizer bereitgestellt werden. Ein phonetisches Lexikon enthält beispielsweise all die in einer grafischen und/oder textuellen Darstellung enthaltenden Sprung- oder Verzweigungsadressen in Wortform sowie die Beschreibung deren Aussprache, so daß diese Worte dem Benutzer des Telefons klar und deutlich vorgesprochen werden können bzw. die sprachliche Äußerungen des Benutzers zuverlässig erkannt werden können.

Damit die Spracherkennungseinrichtung vom Benutzer eingegebene Steuerinformationen in Form von Worten oder Sätzen in einer hohen Qualität erkennen kann, ist der Spracherkennungseinrichtung ein Speicher zugeordnet, in dem sprachliche Steuerinformationen und sprachliche Befehle ablegbar sind. Der Inhalt des Speichers legt den Suchraum für die Spracherkennungseinrichtung fest.

Die an sich bekannte Spracherkennungseinrichtung kann beispielsweise das sogenannte Keyword- und/oder Keyphrase-Spotting anwenden, um aus einer Äußerung den relevanten Teil, beispielsweise nur die sprachliche Steuerinformation, extrahieren zu können.

Um unter Berücksichtigung der begrenzten akustischen Aufnahmefähigkeit des Benutzers ein möglichst benutzerfreundliches Interagieren mit dem Informations-Server zu ermöglichen, erfolgt das akustische Ausgeben oder "Vorlesen" der grafischen und/oder textuellen Darstellung abschnittsweise. Die Unterteilung der vom Informations-Server abgerufenen grafischen und/oder textuellen Darstellung in mehrere Abschnitte vorbestimmter Länge führt die Extraktionseinrichtung in Verbindung mit dem Interpreter und der Dialogsteuereinrichtung aus, indem entsprechende Kennzeichnungen aus der grafischen und/oder textuellen Darstellung gewonnen und verarbeitet werden. Zu jedem Abschnitt kann die Einrichtung zur Dialogsteuerung einen Abschlußtext erzeugen, der beispielsweise alle in dem jeweiligen Abschnitt enthaltenen Sprung- oder Verzweigungsadressen enthält.

An dieser Stelle sei noch darauf hingewiesen, daß die Einrichtung zur Sprachdialogsteuerung derart ausgebildet sein kann, daß die in der grafischen und/oder textuellen Darstellung enthaltenen Sprung- oder Verzweigungsadressen (sogenannte Links) gruppenweise dem Benutzer "vorgelesen" werden, wenn die Sprung- oder Verzweigungsadressen eine vorbestimmte Anzahl überschreiten. Wenn dem Benutzer aus dem Kontext einer akustisch ausgegebenen grafischen und/oder textuellen Darstellung mehrere Sprung- oder Verzweigungsadressen bekannt sind, sorgt die Dialogsteuereinrichtung dafür, daß dem Benutzer lediglich ein allgemeiner Hinweis auf diese Sprung- oder Verzweigungsadressen vorgelesen wird, ohne daß diese ihm einzeln vorgelesen werden müssen.

Um vom Telefon aus einen Informations-Server gezielt anwählen zu können, ist in der Verbindungseinrichtung ein Speicher vorgesehen, in dem die aktuellen Rufnummern und die dazugehörenden IP-Adressen der jeweiligen Informations-Server abgelegt sind.

Das oben genannte technische Problem wird ebenfalls mit den Verfahrensschritten des Anspruchs 11 gelöst.

Danach wird ein Verfahren zur Verfügung gestellt, nach dem zunächst unter Eingabe einer Rufnummer an einem Telefon ein Verbindungsaufbau zu einem Informations-Server eingeleitet wird. Anschließend fordert der Benutzer eine grafische und/oder textuelle Darstellung vom Telefon aus vom angewählten Informations-Server an. Alle Eingaben am Telefon können sprachlich oder über eine Tastatur mit Hilfe von MFV-Signalen erfolgen. Unter Ansprechen auf die Anforderung wird die gewünschte grafische und/oder textuelle Darstellung zunächst in eine Verbindungseinrichtung geladen, die das erste und zweite Kommunikationsnetz verbindet. Ein oder mehrere Steuerparameter werden aus der geladenen grafischen und/oder textuellen Darstellung gewonnen. In der Verbindungseinrichtung wird wenigstens ein Teil der abgelegten grafischen und/oder textuellen Darstellung in eine entsprechende akustische Darstellung umgesetzt und zum Telefon übertragen. Schließlich wird die empfangene akustische Darstellung dem Benutzer des Telefons akustisch ausgegeben. Anschließend werden die Steuerparameter übersetzt und sprachlich am Telefon ausgegeben.

Vorteilhafte Weiterbildungen sind Gegenstand der Unteransprüche.

Neben reinen, nur vorzulesenden Textpassagen können in einer grafischen und/oder textuellen Darstellung auch vom Benutzer auszufüllende Formulare enthalten sein, wobei die auszufüllenden Felder des Formulars durch entsprechende Steuerparameter gekennzeichnet sind. Diese aus der grafischen und/oder textuellen Darstellung gewonnenen Steuerparameter enthalten beispielsweise Hinweise darüber, an welchen Stellen des Formulars Einträge eingefügt werden können. Zweckmäßigerweise erfolgt die sprachliche Aufforderung zum Ausfüllen des Formulars schrittweise, d.h. jedes Eingabefeld wird zeitlich hintereinander abgefragt und vom Benutzer durch entsprechende Eingaben ausgefüllt. Diese Eingaben werden über die Verbindungseinrichtung zum Informations-Server übertragen und dort automatisch an die richtigen Stellen innerhalb des Formulars plaziert.

Ferner können in der grafischen und/oder textuellen Darstellung vom Ersteller Steuerparameter eingefügt werden, die beispielsweise die Adresse einer Audiodatei (Hörspiels, Musikstücke u.s.w.) enthalten, deren Inhalt zwar nicht in der grafischen und/oder textuellen Darstellung ausgegeben wird, aber bei Anforderung durch den Benutzer aufgerufen und akustisch über das Telefon ausgegeben wird.

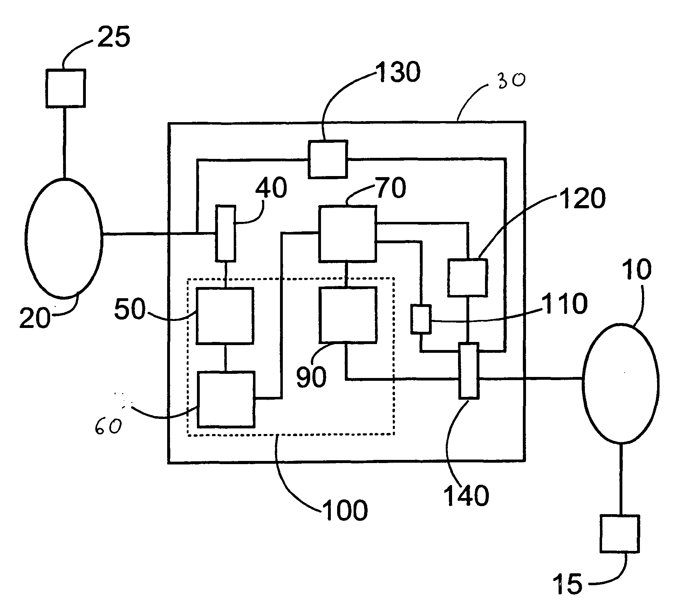

Die Erfindung wird nachstehend anhand eines Ausführungsbeispieles in Verbindung mit der beiliegenden Zeichnung näher erläutert.

Die Figur zeigt ein Kommunikationssystem, welches beispielsweise ein öffentliches Fernsprechnetz 10 und das Internet 20 aufweist, die über eine Verbindungseinrichtung 30, auch Gateway genannt, verbunden sind. Wie die Figur zeigt, ist die Verbindungseinrichtung 30 über eine Telefonschnittstelle 140 an das öffentliche Fernsprechnetz 10 angeschaltet. An das öffentliche Fernsprechnetz 10 sind mehrere Telefone angeschlossen, von denen lediglich das Telefon 15 dargestellt ist. In ähnlicher Weise sind mehrere Informations-Server 25 verschiedener Content-Provider an das Internet 20 angeschlossen, von denen wiederum der einfacheren Darstellung wegen lediglich der Informations-Server 25 dargestellt ist.

Die Hauptfunktion der Verbindungseinrichtung 30 besteht darin, das Internet 20 und das öffentliche Fernsprechnetz 10 derart miteinander zu verbinden, daß wenigstens eine im wesentlichen sprachbezogene Kommunikationsverbindung zwischen einem an das öffentlche Fernsprechnetz 10 angeschalteten Telefon und einem an das Internet 20 angeschalteten Informations-Server hergestellt werden kann. Dazu ist die Verbindungseinrichtung 30 derart zu implementieren, daß dem Kunden wenigstens ein Teil einer beispielsweise im Informations-Server 25 gespeicherten grafischen und/oder textuellen Darstellung am Telefon 15 akustisch wiedergegeben werden kann. Die grafischen und/oder textuellen Darstellungen sind beispielsweis als Web-Seiten in den Informations-Servern gespeichert.

Im Einzelnen weist die Verbindungseinrichtung 30 eine Speichereinrichtung 40 auf, in die eine Webseite vom Informations-Server 25 aktuell geladen werden kann. Die Webseite enthält üblicherweise neben Text- und Bildinhalten auch Kennzeichnungen und Steuerparameter, die vom Content-Provider eingefügt werden und zur akustischen Umsetzung der Webseite benutzt werden können, wie dies weiter unten noch näher erläutert wird. Die Kennzeichnungen innerhalb einer Webseite dienen beispielsweise dazu, den Anfang und das Ende einer Textpassage, die dem Benutzer am Telefon 15 sprachlich ausgegeben werden kann, zu markieren, oder um Anfangs- und Endpunkt einer Bildkomponente, die dem Benutzer nicht akustisch vorgelesen werden kann, zu markieren. Die Steuerparameter enthalten beispielsweise Sprung- oder Verzweigungsadressen, die den Namen aller Links innerhalb einer Webseite entsprechen. Die im Speicher 40 vorübergehend abgelegte Webseite wird einem Parser 50 und einem Interpreter 60 zugeführt. Der Parser 50 ist an sich bekannt und dient dazu, mit Hilfe von in der Webseite eingebetteten Kennzeichnungen die in eine akustische Darstellung umsetzbare Information aus der geladenen Webseite zu extrahieren. Neben den eigentlichen Textpassagen, die dem Benutzer über das Telefon 15 vorgelesen werden können, extrahiert der Parser 50 auch die Steuerparameter aus der gespeicherten Webseite, die zusammen mit den extrahierten Textpassagen und den Kennzeichnungen dem Interpreter 60 zugeführt werden. Der Interpreter 60 hat die Aufgabe, die extrahierten Textpassagen, Kennzeichnungen und/Steuerparameter zu identifizieren und gemäß einem vorbestimmten Regelsatz zu übersetzen oder umzusetzen. Die übersetzten Textpassagen und Steuerparameter werden an den Eingang einer Dialogsteuereinrichtung 70 angelegt, die mit einem Synthesizer 90 verbunden ist. Der Synthesizer 90 dient dazu, die vom Interpreter 60 übersetzten Textpassagen in die entsprechende akustische Darstellung umzusetzen. Der Synthesizer 90 setzt ferner die übersetzten Steuerparameter beispielsweise in entsprechende Namen aktueller Links um, zu denen aus der Webseite verzeigt werden kann. Der Parser 50, der Interpreter 60 und der Synthesizer 90 bilden schließlich zusammen eine Umsetzeinrichtung 100, die aus einer geladenen Webseite ein akustisches Äquivalent erzeugt, welches als Grundlage für einen Sprachdialog mit dem Kunden dient.

Die Verbindungseinrichtung 30 weist ferner eine Spracherkennungseinrichtung 110 auf, die sprachliche Eingaben des Benutzers am Telefon 15 erkennen und in den entsprechenden Text umsetzen kann.

Die Verbindungseinrichtung 30 weist ferner eine Datenbank 130 auf, in der die aktuellen Rufnummern und die dazugehörenden IP-Adressen der Informations-Server gespeichert sind, mit deren Hilfe der Kunde über das Telefon 15 eine Verbindung zu einem gewünschten Informations-Server, beispielsweise dem Informations-Server 25 aufbauen kann.

Mit Hilfe des Kommunikationssystems ist es möglich, einem Telefonkunden Webseiten in akustischer Form zur Verfügung zu stellen, ohne daß der Kunde einen Personalcomputer zur Darstellung der Webseite benötigt. Darüber hinaus kann das Kommunikationssystem durch Anschalten weiterer Informations-Server einfach und kostengünstig erweitert werden. Dazu sind lediglich die entsprechenden Rufnummern und IP-Adressen der neu hinzugekommenen Informations-Server in der Datenbank 130 abzulegen. Für den Content-Provider eines Informations-Servers hat dies den Vorteil, daß er mit üblichen Werkzeugen und Methoden neue Webseiten erstellen kann, die einem Kunden dann mittels der Verbindungseinrichtung 30 akustisch ausgegeben werden können. Der Vorteil für den Serviceprovider, der für das Fernsprechnetz 10 und die Verbindungseinrichtung 30 verantwortlich ist, liegt darin, daß dieser seinen Kunden neue Webseiten in sprachlicher Form anbieten kann, ohne daß hierzu softwarebezogene oder schaltungstechnische Änderungen in der Verbindungseinrichtung 30 erforderlich wären.

Die Funktionsweise des Kommunikationssystems wird nachstehend anhand eines Szenarios näher beschrieben.

Dazu sei angenommen, daß der Benutzer des Telefons 15 sich eine in dem Informations-Server 25 gespeicherte Information sprachlich vorlesen lassen möchte. Hierzu wählt der Benutzer in dem vorliegenden Beispiel zunächst die Rufnummer des Informations-Servers 25. Eine dem Kunden zugeordnete Vermittlungsstelle des öffentlichen Fernsprechnetzes 10 erkennt die Rufnummer als Adresse eines Informationsservers und leitet die Rufnummer zur Verbindungseinrichtung 30 weiter. Die Rufnummer wird in der Verbindungseinrichtung 30 beispielsweise von der Telefonschnittstelle 140 erkannt und als Speicheradresse der Datenbank 130 zugeführt, aus der die der gewählten Rufnummer zugeordnete IP-Adresse des Informations-Servers 25 ausgelesen wird. Die ausgelesene IP-Adresse wird dann zum Aufbau einer Verbindung über das Internet 20 zum Informations-Server 25 verwendet. Nunmehr besteht eine interaktive Kommunikationsverbindung zwischen dem Benutzer des Telefons 15 und dem Informations-Server 25, die rein sprachlicher Natur sein kann.

Zunächst wird die Startseite des Informations-Servers 25 in den Speicher 40 geladen. Aus der Startseite werden anschließend die dem Benutzer des Telefons 15 vorzulesenden Textinhalte zusammen mit den auf der Startseite enthaltenen Steuerparametern im Parser 50 extrahiert und dem Interpreter 60 zugeführt. Der Interpreter 60 übersetzt, wie bereits oben erwähnt, die extrahierten Textinhalte und Steuerparameter und überträgt die übersetzten Textinhalte und Steuerparameter zur Dialogsteuereinrichtung 70. Die Dialogsteuereinrichtung 70 sorgt dafür, daß der Synthesizer 90 zunächst die textrelevanten Passagen der Startseite in eine entsprechende akustische Darstellung umsetzt und über die Telefonschnittstelle 21 zum Telefon 15 überträgt. Auf diese Weise kann der Textinhalt der Startseite dem Benutzer über das Telefon 15 sozusagen vorgelesen werden. Anschließend werden die entsprechenden akustischen Darstellungen der Steuerparameter, welche beispielsweise die Namen vorbestimmter Links, auch Verzweigungsoptionen genannt, darstellen, im Synthesizer 90 umgesetzt und wiederum über das Telefon 15 dem Benutzer vorgelesen. Sollte die Anzahl der Verzweigungsoptionen einen vorbestimmten Grenzwert überschreiten, kann die Dialogsteuereinrichtung 70 dafür sorgen, daß dem Benutzer die Verzweigungsoptionen gruppenweise vorgelesen werden, die er sich auf diese Weise leichter merken kann. Nach dem Vorlesen der Verzweigungsoptionen kann der Benutzer an dem Telefon 15 eine Verzweigungsoption in sprachlicher Form eingeben. Die gesprochene Verzweigungsoption wird in der Spracherkennungseinrichtung 110 erkannt, in den entsprechenden Text umgesetzt und über die Dialogsteuereinrichtung 70 zum Informations-Server 25 übermittelt. Im vorliegenden Fall lautet die Verzweigungsoption beispielsweise "Bundesschuldenverwaltung", woraufhin die entsprechende Webseite im nächsten Zyklus vom Informations-Server 25 in den Speicher 40 geladen wird. Diese Webseite hat beispielsweise folgenden auszugsweise wiedergegebenen Inhalt:
" Willkommen bei der Bundesschuldenverwaltung.

Die Bundesschuldenverwaltung ist eine selbständige Oberbehörde im Geschäftsbereich des Bundesministeriums der Finanzen.

Ihre Kernaufgabe ist, die Beurkundung der Kreditaufnahmen des Bundes und seiner Sondervermögen auf dem Kapitalmarkt zu gewährleisten und für die bankmäßige Verwaltung und Abwicklung der Kredite zu sorgen."

In dem vorliegenden Ausschnitt der Webseite stellen die unterstrichenen Begriffe vom Hersteller der Webseite eingefügte Steuerparameter dar, die Verzweigungsoptionen entsprechen. Ferner enthält der Ausschnitt mehrere nicht dargestellte Kennzeichnungen, die zum einen den vorliegenden Auszug als Textpassage markieren, der zwei Absätze enthält. Der Parser 50 extrahiert danach die akustisch darzustellenden Textpassagen, die Anfangs- und Endmarkierungen jedes Absatzes sowie die Steuerparameter aus der Webseite. Der Interpreter 60 identifiziert die Kennzeichnungen, die Steuerparameter und die Textabschnitte und übersetzt sie mit Hilfe eines Regelwerkes in eine für die Dialogsteuereinrichtung 70 verarbeitbare Form. Bei einer speziellen Ausführungsform kann der Interpreter 60 die Absätze der Textpassage als getrennte und unabhängig voneinander zu verarbeitende Informationspakete aufzufassen. Die Dialogsteuereinrichtung 70 führt unter Steuerung des Interpreters 60 zunächst den ersten Absatz "Willkommen bei der Bundesschuldenverwaltung ... der Finanzen." dem Synthesizer 90 zu, der aus dem Text die entsprechende akustische Darstellung erzeugt und diese über das öffentliche Fernsprechnetz 10 zum Telefon 15 überträgt. Über das Telefon 15 wird der Absatz dem Benutzer in sprachlicher Form vorgelesen. Anschließend steuert der Interpreter 60 die Dialogsteuereinrichtung derart, daß als Steuerparameter neben den Verzweigungsoptionen "Bundesschuldenverwaltung" und "Bundesministerium der Finanzen" auch die Aufforderung "weiter" dem Synthesizer 70 zugeführt werden. Die Dialogsteuereinrichtung 70 erzeugt dann im Zusammenspiel mit dem Synthesizer 90 die folgende am Telefon 15 auszugebende sprachliche Information: "Ihre Optionen sind : Bundesschuldenverwaltung, Bundesministerium der Finanzen oder weiter ?"

Der Benutzer kann nunmehr zwischen den drei Begriffen auswählen und einen der Begriffe sprachlich am Telefon eingeben. Der Kunde gibt beispielsweise den Begriff "weiter" am Telefon 15 ein. Unter Ansprechen auf den eingegebenen Begriff "weiter" sorgt die Dialogsteuereinrichtung 70 dafür, daß nunmehr der zweite Absatz der geladenen Webseite dem Synthesizer 90 zugeführt wird. Nach der Umsetzung des zweiten Textabsatzes in die entsprechende akustische Darstellung wird folgender Inhalt am Telefon 15 vorgelesen: "Ihre Kernaufgabe ist, für die Beurkundung der Kreditaufnahmen des Bundes und seiner Sondervermögen ... und der Abwicklung der Kredite zu sorgen."

Ferner veranlaßt die Dialogsteuereinrichtung 70, daß die in diesem Absatz enthaltenen Steuerparameter "Beurkundung", "Kreditaufnahmen", "Sondervermögen" und "weiter" dem Synthesizer zugeführt werden, der wiederum entsprechende akustische Darstellungen dieser Worte erzeugt, die dem Benutzer vorgelesen werden. Damit ein weiterer Absatz der Webseite vorgelesen werden kann, müßte der Benutzer wiederum das Wort "weiter" eingeben. Wählt er jedoch einen der Verzweigungsoptionen "Beurkundung", "Kreditaufnahmen", "Sondervermögen" aus, sorgt die Dialogsteuereinrichtung 70 dafür, daß die entsprechende Webseite vom Informations-Server 25 in den Speicher 40 geladen wird. Das Prozedere wird solange wiederholt, bis der Benutzer am Telefon 15 die Verbindung zum Informations-Server 25 beispielsweise durch die sprachliche Eingabe "Ende" auslöst. Die Verbindung kann auch automatisch durch die Verbindungseinrichtung 30 ausgelöst werden, wenn eine Webseite am Ende keine weiteren Verzweigungsoptionen mehr enthält.

Um die Qualität des Synthesizers 90 und der Spracherkennungseinrichtung 110 zu verbessern, können beispielsweise die in der aktuell geladenen Webseite enthaltenen Verzweigungsoptionen, wie z. B. "Beurkundung", "Kreditaufnahmen", "Sondervermögen", oder fremdstämmige Worte und Abkürzungen in einen dem Synthesizer 90 und der Spracheerkennungseinrichtung 110 zugeordneten Speicher (nicht dargestellt) abgelegt werden, der neben dem eigentlichen Wort auch die dazugehörende Beschreibung der Aussprache enthält.

Ferner können alle dem Benutzer angebotenen Befehle und Verzweigungsoptionen, die in Verbindung mit einer aktuell geladenen Webseite zur Verfügung stehen, in einen Speicher geladen werden, der der Spracherkennungseinrichtung 110 zugeordnet ist. Durch die Verwendung von aktualisierbaren Speichern kann die Anzahl gleichzeitig aktivierter Wörter und Phrasen gering bleiben, wodurch die Verarbeitungsgeschwindigkeit und die Spracherkennungsfähigkeit der Verbindungseinrichtung 30 erhöht werden kann.

Neben Webseite-abhängigen Befehlen können dem Kunden auch durch das System festgelegte Befehle, wie zum Beispiel "Hilfe", "Startseite", "Wiederholen", "Zurück", "Weiter" zur Verfügung gestellt werden.

Um dem Autor einer Webseite eine gezielte Steuerung der akustischen Darstellung der Webseiten zu ermöglichen, können weitere Steuerparameter in Form von Attributen in die Webseiten eingefügt werden, die nur von der Verbindungseinrichtung interpretiert werden, von Standard-Browsern des Internets aber ignoriert werden. Solche Attribute sind beispielsweise:

### "Start"

Dieses Attribut wird vom Parser und Interpreter als Markierung interpretiert, an der die Umsetzung der Webseite in die entsprechende akustische Darstellung begonnen wird. Alle Inhalte vor dieser Marke werden nicht umgesetzt.

### "Ignore Begin# Ignore End#"

Anhand dieser Markierungen erkennt der Parser und Interpreter einen Bereich, der nicht für die auditive Darstellung bestimmt ist, aber beispielsweise im visuellen Browser erscheinen soll.

### "Alt Audio"

Aus dieser Markierung erkennt der Parser und Interpreter einen Filenamen, unter dem beispielsweise eine Audio-Datei abgelegt ist, die dem Benutzer über das Telefon 15 akustisch ausgegeben werden soll.

### "AltText"

Dieses Attribut wird vom Parser und Interpreter erkannt, um einen Text, der beispielsweise einer Beschreibung einer Bildkomponente in einer Webseite entspricht, akustisch am Telefon auszugeben.

Ein weiteres Leistungsmerkmal der Verbindungseinrichtung 30 kann darin bestehen, daß die Dialogsteuereinrichtung 70 automatisch dem Benutzer des Telefons 15 einen Fehler meldet, wenn die Spracherkennungseinrichtung 110 ein Wort oder eine Phrase nicht richtig erkannt hat. Die Dialogsteuereinrichtung 90 kann zu diesem Zweck derart ausgebildet sein, daß sie im Fehlerfall dem Benutzer wiederholt zur Eingabe eines Befehls oder einer Verzweigungsmöglichkeit auffordert.

## Patentansprüche

1. Kommunikationssystem zum Bereitstellen einer Kommunikationverbindung zwischen einem Benutzer eines Telefons (15) und einem Server (25), mit einem ersten Kommunikationsnetz (10), an das mehrere Telefone anschaltbar sind,
einem zweiten Kommunikationsnetz (20), insbesondere das Internet, an das wenigstens ein, abrufbare grafische und/oder textuelle Darstellungen enthaltender Server (25) anschaltbar ist, und
eine Verbindungseinrichtung (30) zum Verbinden des ersten Kommunikationsnetzes (10) mit dem zweiten Kommunikationsnetz (20) umfassend:
eine Einrichtung (110, 120) zum Erkennen von an einem Telefon (15) eingegebenen Befehlen und/oder Steuerinformationen,
eine Speichereinrichtung (40) zum Speichern einer unter Ansprechen auf die Befehle und/oder Steuerinformationen von einem Server (25) abgerufenen grafischen und/oder textuellen Garstellung,
eine Umsetzungseinrichtung (100) zum Umsetzen wenigstens eines Teils der in der Speichereinrichtung (40) abgelegten grafischen und/oder textuellen Darstellung in eine entsprechende akustische Darstellung zur Übertragung zum Telefon (15) wobei die Umsetzungseinrichtung (100) eine Extraktionseinrichtung (50) zum Extrahieren der in die akustische Darstellung umsetzbaren Information, von Kennzeichnungen und/oder Steuerparametern aus der gespeicherten grafischen und/oder textuellen Darstellung, eine Einrichtung (60) zum Identifizieren und Übersetzen der extrahierten Information, Kennzeichnungen und/oder Steuerparameter, und
einen Synthesizer (90) zum Umsetzen der übersetzten Information und Steuerparameter in eine entsprechende akustische Darstellung aufweist,
wobei die Einrichtung (60) zum Identifizieren und Übersetzen und die Extraktionseinrichtung (50) Attribute in der gespeicherten grafischen und/oder textuelle Darstellung als Markierungen interpretieren,
wobei diese Markierungen die gezielte Steuerung der zu übersetzenden Information und Steuerparameter ermöglichen,
wobei die Markierungen von der Verbindungseinrichtung (30) interpretierbar sind, aber von einem Standard-Browser des Internets ignoriert werden.

2. Kommunikationssystem nach Anspruch 1 **dadurch gekennzeichnet, dass** die Umsetzung der grafischen und/oder textuellen Darstellung in eine entsprechende akustische Darstellung durch ein Attribut eingeleitet wird, wobei diese Attribut insbesondere das Wort "Start" sein kann.

3. Kommunikationssystem nach Anspruch 1 oder 2, **dadurch gekennzeichnet, dass** die Umsetzung der grafischen und/oder textuellen Darstellung in eine entsprechenden akustische Darstellung durch ein Attributpaar ausgesetzt wird, wobei das Attributpaar insbesondere die Wörter "Ignore Begin# Ignore End#" sind.

4. Kommunikationssystem nach Anspruch 1, 2 oder 3, **dadurch gekennzeichnet, dass** die Verbindungseinrichtung (30) eine Einrichtung (70) zur Steuerung des Dialogs zwischen dem Benutzer des Telefons und dem Server aufweist.

5. Kommunikationssystem, nach Anspruch 4, **dadurch gekennzeichnet, dass** die Einrichtung zur Dialogsteuerung (70) zur Bereitstellung vorbestimmter Texte für den Benutzer ausgebildet ist.

6. Kommunikationssystem nach einem der Ansprüche 1 bis 5, **dadurch gekennzeichnet, dass** die Einrichtung zum Erkennen (110, 120) von an dem Telefon eingegebenen Befehlen und/oder Steuerinformationen eine Spracherkennungseinrichtung (110) und/oder einen MFV-Detektor (120) aufweist.

7. Kommunikationssystem nach Anspruch 6, **gekennzeichnet durch**
einen ersten Speicher zum Speichern eines systemspezifischen phonetischen Lexikons,
einen zweiten Speicher zum vorübergehenden Ablegen eines zu einer grafischen und/oder textuellen Darstellung gehörenden phonetischen Lexikons und/oder
einen dritten Speicher zum aktualisierbaren Ablegen wenigstens eines phonetischen Lexikons eines Informationsanbieters, wobei
der erste, zweite und/oder dritte Speicher der Umsetzungseinrichtung (100) und der Spracherkennungseinrichtung (110) zugeordnet ist.

8. Kommunikationssystem nach Anspruch 6 oder 7, **gekennzeichnet durch** einen der Spracherkennungseinrichtung (110) zugeordneten Speicher zum Ablegen von Steuerparametern zugeordneten sprachlichen Steuerinformationen und zum Ablegen von sprachlichen Befahlen.

9. Kommunikationssystem nach einem der Ansprüche 1 bis 8, **dadurch gekennzeichnet, dass** jede vom Server (25) abrufbare grafische und/oder textuelle Darstellung einer Webseite entspricht.

10. Kommunikationssystem nach einem der Ansprüche 1 bis 9, **dadurch gekennzeichnet, dass** die Extraktionseinrichtung (50) zum Unterteilen der vom Server abgerufenen grafischen und/oder textuelle Darstellung in mehrere Abschnitte vorbestimmter Länge ausgebildet ist.

11. Kommunikationssystem nach einem der Ansprüche 1 bis 10, **gekennzeichnet durch** einen Speicher (130) zum aktualisierbaren Speichern von Rufnummern und diesen zugeordneten IP-Adressen der jeweiligen Server.

12. Verfahren zum Bereitstellen einer
Kommunikationverbindung zwischen einem Benutzer eines Telefons und einem Informations-Server über ein Kommunikationssystem nach einem der Ansprüche 1 bis 11, wobei das
Kommunikationssystem ein erstes Kommunikationsnetz (10), an das mehrere Telefone (15) anschaltbar sind, ein zweites Kommunikationsnetz (20), an das wenigstens ein, abrufbare grafische und/oder textuelle Darstellungen enthaltender Server (25) anschaltbar ist, und eine das erste und zweite Kommunikationsnetz verbindende Verbindungseinrichtung (30) aufweist, mit folgenden Verfahrensschritten:
a) Einleiten eines Verbindungsaufbaus an einem Telefon (15) zu einem Server (25);
b) Anfordern einer grafischen und/oder textueilen Darstellung vom Telefon aus;
c) Laden der angeforderten grafischen und/oder textueilen Darstellung in die Verbindungseinrichtung;
d) Umsetzen wenigstens eines Teils der in der Verbindungseinrichtung (30) abgelegten grafischen und/oder textueilen Darstellung in eine entsprechende akustische Darstellung;
e) Übertragen der akustischen Darstellung zum Telefon; und
f) akustische Ausgabe der akustischen Darstellung am Telefon.

13. Verfahren nach Anspruch 12, **dadurch gekennzeichnet, dass** Schritt c) den Schritt des Gewinnens eines oder mehrerer Steuerparamter aus der geladenen grafischen und/oder textuellen Darstellung umfasst, dass
die Steuerparameter übersetzt und anschließend sprachlich am Telefon ausgegeben werden, dass
der Benutzer sprachlich aufgefordert wird, wenigstens einen der Steuerparamter am Telefon einzugeben, dass
in Abhängigkeit des wenigstens einen eingegebenen Steuerparameters die Umsetzung der grafischen und/oder textuellen Darstellung in eine entsprechende akustische Darstellung an einer vorbestimmte Stelle fortgesetzt wird, eine weitere grafische und/oder textuelle Darstellung in die Verbindungseinrichtung geladen wird, oder die hergestellte Verbindung zum Server beendet wird.

14. Verfahren nach Anspruch 12, **dadurch gekennzeichnet, dass** die geladene grafische und/oder textuelle Darstellung ein auszufüllendes Formular enthält und die gewonnenen Steuerparameter sprachliche Hinweise und Aufforderungen zum Ausfüllen des Formulars enthalten.

15. Verfahren nach Anspruch 12 oder 13, **dadurch gekennzeichnet, dass** die gewonnenen Steuerparamter Adressen zum Laden einer Audio-Datei enthalten, die akustisch am Telefon ausgegeben wird.

16. Verfahren nach Anspruch 12 oder 13, **dadurch gekennzeichnet, dass** ein Benutzer Befehle und/ oder Steuerinformationen sprachlich oder mittels Mehrfrequenzwahlverfahren am Telefon eingibt.

17. Verfahren nach einem der Ansprüche 12 bis 16, **dadurch gekennzeichnet, dass** die geladene grafische und/oder textuelle Darstellung in Abschnitte vorbestimmter Länge unterteilt wird, dass wenigstens ein Teil jedes Abschnittes in die entsprechende akustische Darstellung umgesetzt wird, und dass die Abschnitte zeitlich nacheinander zum Telefon übertragen werden.

18. Verfahren nach Anspruch 17, **dadurch gekennzeichnet, dass** die Verbindungseinrichtung am Ende jedes Abschnitts einen vorbestimmten Text erzeugt, der am Telefon ausgegeben wird.

## Claims

1. Communication system for providing a communication connection between a user of a telephone (15) and a server (25), having a first communications network (10) to which multiple telephones can be connected,
a second communications network (20), in particular the Internet, to which at least one server (25) containing retrievable graphic and/or textual representations can be connected, and
a connection device (30) for connecting the first communications network (10) to the second communications network (20), comprising:
a device (110, 120) for detecting commands and/or control information that are input via a telephone (15),
a memory device (40) for storing a graphic and/or textual representation that has been retrieved from a server (25) in response to the commands and/or control information,
a conversion device (100) for converting at least a part of the graphic and/or textual representation stored in the memory device (40) into a corresponding acoustic representation for transmission to the telephone (15), wherein the conversion device (100) has an extraction device (50) for extracting the information that can be converted into the acoustic representation, from identifiers and/or control parameters from the stored graphic and/or textual representation, a device (60) for identifying and translating the extracted information, identifiers and/or control parameters, and
a synthesizer (90) for converting the translated information and control parameters into a corresponding acoustic representation,
wherein the device (60) for identifying and translating, and the extraction device (50), interpret attributes in the stored graphic and/or textual representation as markings,
wherein these markings allow the specific control of the information and control parameters to be translated,
wherein the markings can be interpreted by the connection device (30), but are ignored by a standard browser of the Internet.

2. Communication system according to claim 1, **characterized in that** the conversion of the graphic and/or textual representation into a corresponding acoustic representation is initiated by an attribute, wherein this attribute can, in particular, be the word "Start".

3. Communication system according to claim 1 or 2, **characterized in that** the conversion of the graphic and/or textual representation into a corresponding acoustic representation is halted by an attribute pair, wherein the attribute pair is, in particular, the words "Ignore Begin# Ignore End#".

4. Communication system according to claim 1, 2, or 3, **characterized in that** the connection device (30) has a device (70) for controlling the dialog between the telephone user and the server.

5. Communication system according to claim 4, **characterized in that** the dialog control device (70) is designed to provide predetermined texts for the user.

6. Communication system according to any one of claims 1 through 5, **characterized in that** the device for detecting (110, 120) commands and/or control information that are input via the telephone has a speech recognition device (110) and/or a DTMF detector (120).

7. Communication system according to claim 6, **characterized by**
a first memory for storing a system-specific phonetic lexicon,
a second memory for temporarily storing a phonetic lexicon appertaining to a graphic and/or textual representation, and/or
a third memory for updatably storing at least one phonetic lexicon of an information supplier, wherein
the first, second, and/or third memory is associated with the conversion device (100) and the speech recognition device (110).

8. Communication system according to claim 6 or 7, **characterized by** a memory associated with the speech recognition device (110) for storing spoken control information items associated with control parameters and for storing spoken commands.

9. Communication system according to any one of claims 1 through 8, **characterized in that** each graphic and/or textual representation that can be retrieved from the server (25) corresponds to a web page.

10. Communication system according to any one of claims 1 through 9, **characterized in that** the extraction device (50) is designed to divide the graphic and/or textual representation retrieved from the server into multiple sections of predetermined length.

11. Communication system according to any one of claims 1 through 10, **characterized by** a memory (130) for updatably storing call numbers and associated IP addresses of the respective servers.

12. Method for providing a communication connection between a user of a telephone and an information server via a communications system according to any one of claims 1 through 11, wherein
the communication system has a first communications network (10) to which multiple telephones (15) can be connected, a second communications network (20) to which at least one server (25) containing retrievable graphic and/or textual representations can be connected, and a connection device (30) that connects the first and second communications networks, comprising the following method steps:
a) initiating a connection set-up to a server (25) via a telephone (15);
b) requesting a graphic and/or textual representation via the telephone;
c) loading the requested graphic and/or textual representation into the connection device;
d) converting at least a part of the graphic and/or textual representation stored in the connection device (30) into a corresponding acoustic representation;
e) transmitting the acoustic representation to the telephone; and
f) acoustic output of the acoustic representation over the telephone.

13. Method according to claim 12, **characterized in that** step c) includes the step of obtaining one or more control parameters from the loaded graphic and/or textual representation, **in that**
the control parameters are translated and subsequently are output in spoken form over the telephone, **in that**
the user is verbally prompted to input at least one of the control parameters via the telephone, **in that**,
as a function of the at least one control parameter that was input, the conversion of the graphic and/or textual representation into a corresponding acoustic representation is continued at a predetermined point, another graphic and/or textual representation is loaded into the connection device, or the established connection to the server is terminated.

14. Method according to claim 12, **characterized in that** the loaded graphic and/or textual representation includes a form to be filled out, and the obtained control parameters contain spoken instructions and prompts for filling out the form.

15. Method according to claim 12 or 13, **characterized in that** the obtained control parameters contain addresses for loading an audio file that is output acoustically via the telephone.

16. Method according to claim 12 or 13, **characterized in that** a user inputs commands and/or control information in spoken form or using dual-tone multi-frequency over the telephone.

17. Method according to any one of claims 12 through 16, **characterized in that** the loaded graphic and/or textual representation is divided into sections of predetermined length, **in that** at least a part of each section is converted into the corresponding acoustic representation, and **in that** the sections are transmitted in chronological sequence to the telephone.

18. Method according to claim 17, **characterized in that** the connection device generates, at the end of each section, a predetermined text that is output via the telephone.

## Revendications

1. Système de communication pour la fourniture d'une liaison de communication entre un utilisateur d'un téléphone (15) et un serveur (25), comportant un premier réseau de communication (10), auquel peuvent être connectés plusieurs téléphones,
un deuxième réseau de communication (20), notamment l'internet, auquel peut être connecté au moins un serveur (25) contenant des représentations graphiques et/ou textuels consultables, et un dispositif de liaison (30) pour relier le premier réseau de communication (10) au deuxième réseau de communication (20) comprenant :
un dispositif (110, 120) de détection de commandes et/ou d'informations de commande entrées sur un téléphone (15),
un dispositif de mémoire (40) pour enregistrer une représentation graphique et/ou textuelle consultée depuis un serveur (25) en réponse aux commandes et/ou informations de commande,
un dispositif de transformation (100) pour transformer au moins une partie de la représentation graphique et/ou textuelle stockée dans le dispositif mémoire (40) en une représentation acoustique correspondante destinée à être transmise au téléphone (15), le dispositif de transformation (100) comportant un dispositif d'extraction (50) pour extraire l'information pouvant être transformée en représentation acoustique, des repères et/ou des paramètres de commande de la représentation graphique et/ou textuelle enregistrées, un dispositif (60) pour identifier et traduire l'information, les repères et/ou paramètres de commande extraits, et un synthétiseur (90) pour transformer l'information et les paramètres de commande traduits en une représentation acoustique correspondante,
le dispositif (60) d'identification et de traduction et le dispositif d'extraction (50) interprétant des attributs dans la représentation graphique et/ou textuelle comme des marquages,
ces marquages permettant la commande ciblée de l'information et des paramètres de commande à traduire,
les marquages pouvant être interprétés par le dispositif de liaison (31) mais étant ignorés par un navigateur standard de l'internet.

2. Système de communication selon la revendication 1, **caractérisé en ce que** la transformation de la représentation graphique et/ou textuelle en une représentation acoustique correspondante est déclenchée par un attribut, cet attribut pouvant notamment être le mot « Start ».

3. Système de communication selon la revendication 1 ou 2, **caractérisé en ce que** la transformation de la représentation graphique et/ou textuelle en une représentation acoustique correspondante est suspendue par une paire d'attributs, la paire d'attributs étant notamment les mots « Ignore Begin# Ignore End# ».

4. Système de communication selon la revendication 1, 2 ou 3, **caractérisé en ce que** le dispositif de liaison (30) comporte un dispositif (70) de commande du dialogue entre l'utilisateur du téléphone et le serveur.

5. Système de communication selon la revendication 4, **caractérisé en ce que** le dispositif de commande de dialogue (70) est conçu pour fournir des textes prédéterminés à l'utilisateur.

6. Système de communication selon l'une des revendications 1 à 5, **caractérisé en ce que** le dispositif de détection (110, 120) de commandes et/ou d'informations de commande entrées sur le téléphone comporte un dispositif de reconnaissance vocale (110) et/ou un détecteur DTMF (120).

7. Système de communication selon la revendication 6, **caractérisé par** une première mémoire pour le stockage d'un lexique phonétique spécifique au système,
une deuxième mémoire pour le stockage temporaire d'un lexique phonétique appartenant à une représentation graphique et/ou textuelle et/ou
une troisième mémoire pour le stockage actualisable d'au moins un lexique phonétique d'un fournisseur d'informations,
la première, la deuxième et/ou la troisième mémoire étant associée au dispositif de transformation (100) et au dispositif de reconnaissance vocale (110).

8. Système de communication selon la revendication 6 ou 7, **caractérisé par** une mémoire associée au dispositif de reconnaissance vocale (110) pour le stockage d'informations de commande vocales associées à des paramètres de commande et pour le stockage de commandes vocales.

9. Système de communication selon l'une des revendications 1 à 8, **caractérisé en ce que** chaque représentation graphique et/ou textuelle consultable depuis le serveur (25) correspond à une page web.

10. Système de communication selon l'une des revendications 1 à 9, **caractérisé en ce que** le dispositif d'extraction (50) est conçu pour diviser la représentation graphique et/ou textuelle consultée depuis le serveur en plusieurs sections de longueur prédéterminée.

11. Système de communication selon l'une des revendications 1 à 10, **caractérisé par** une mémoire (130) pour le stockage actualisable de numéros de téléphone et d'adresses IP des serveurs respectifs qui leur sont associées.

12. Procédé pour la fourniture d'une liaison de communication entre un utilisateur d'un téléphone et un serveur d'informations par l'intermédiaire d'un système de communication selon l'une des revendications 1 à 11,
le système de communication présentant un premier réseau de communication (10), auquel peuvent être connectés plusieurs téléphones (15), un deuxième réseau de communication (20), auquel peut être connecté au moins un serveur (25) contenant des représentations graphiques et/ou textuelles consultables, et un dispositif de liaison reliant le premier et le deuxième réseau de communication, comprenant les étapes de procédé suivantes :
a) déclenchement de l'établissement d'une connexion depuis un téléphone (15) vers un serveur (25) ;
b) demande d'une représentation graphique et/ou textuelle depuis le téléphone ;
c) téléchargement de la représentation graphique et/ou textuelle vers le dispositif de liaison ;
d) transformation d'au moins une partie de la représentation graphique et/ou textuelle stockée dans le dispositif de liaison (30) en une représentation acoustique correspondante ;
e) transmission de la représentation acoustique au téléphone ; et
f) restitution acoustique de la représentation acoustique sur le téléphone.

13. Procédé selon la revendication 12, **caractérisé en ce que** l'étape c) comprend l'étape de la récupération d'un ou plusieurs paramètres de commande de la représentation graphique et/ou textuelle chargée,
**en ce que** les paramètres de commande sont traduits puis restitués vocalement au téléphone,
**en ce que** l'utilisateur est invité vocalement d'entrer au moins un des paramètres de commande sur le téléphone,
**en ce que**, en fonction du au moins un paramètre de commande entré, la transformation de la représentation graphique et/ou textuelle en une représentation acoustique correspondante reprend à un endroit prédéterminé, une représentation graphique et/ou textuelle supplémentaire est téléchargée vers le dispositif de liaison ou la connexion établie vers le serveur est terminée.

14. Procédé selon la revendication 12, **caractérisé en ce que** la représentation graphique et/ou textuelle téléchargée contient un formulaire à remplir et **en ce que** les paramètres de commande récupérés contiennent des indications et invitations vocales pour remplir le formulaire.

15. Procédé selon l'une des revendications 12 ou 13, **caractérisé en ce que** les paramètres de commande récupérés contiennent des adresses pour le téléchargement d'un fichier audio restitué acoustiquement au téléphone.

16. Procédé selon l'une des revendications 12 ou 13, **caractérisé en ce que** l'utilisateur entre des commandes et/ou des informations de commande vocalement ou par DTMF sur le téléphone.

17. Procédé selon l'une des revendications 12 à 16, **caractérisé en ce que** la représentation graphique et/ou textuelle téléchargée est divisée en sections de longueur prédéterminée, **en ce qu'**au moins une partie de chaque section est transformée en représentation acoustique correspondante, et **en ce que** les sections sont transmises successivement dans le temps au téléphone.

18. Procédé selon la revendication 17, **caractérisé en ce que** le dispositif de liaison génère, à la fin de chaque section, un texte prédéterminé qui est restitué au téléphone.
